# EUROPÄISCHE PATENTSCHRIFT

(11) **EP 0 732 442 B1**
(45) Veröffentlichungstag und Bekanntmachung des Hinweises auf die Patenterteilung: **28.11.2001**
(21) Anmeldenummer: 96101246.5
(22) Anmeldetag: 30.01.1996
(51) Int. Cl.: D21B 1/32

(54) **Verfahren zur Behandlung von Altpapier sowie Anlage zu seiner Durchführung**
Process for treating waste paper and apparatus for its application
Procédé pour le traitement de vieux papiers et dispositif pour son application

(30) Priorität: 17.03.1995 DE 19509789
(43) Veröffentlichungstag der Anmeldung: 18.09.1996
(73) Patentinhaber: Voith Sulzer Stoffaufbereitung GmbH, 88191 Ravensburg (DE)
(72) Erfinder: Krebs, Jochen, D-88213 Ravensburg (DE)

(56) Entgegenhaltungen:
- EP-A- 0 218 738
- EP-A- 0 486 904
- DE-A- 3 210 503
- US-A- 3 925 150

## Beschreibung

Die Erfindung bezieht sich auf ein Verfahren gemäß dem Oberbegriff des Anspruchs 1.

Bekanntlich können in der ersten Verfahrensstufe der Auflösung von Altpapier die unterschiedlichsten Defibriermaschinen, wie z.B. Pulper, Zerfaserer und Auflösetrommeln verwendet werden. Der Pulper, auch Stofflöser genannt, besteht im wesentlichen aus einem befüllbaren Trog, in den das Altpapier zusammen mit Wasser eingefüllt wird. Dabei bildet sich eine mehr oder weniger zähe wässrige Suspension, die den Behälter bis zu einer bestimmten Höhe anfüllt. Zur Zerkleinerung und Vermischung befindet sich innerhalb des gefüllten Bereiches ein angetriebener Rotor. Bei so einem Stofflöser muß ein großes Flüssigkeitsvolumen (ca. 95 % bis 85 % Wasser) ständig bewegt werden, was viel Energie kostet. Im Unterschied zum Stofflöser besteht eine Auflösetrommel im wesentlichen aus einem liegenden Zylinder, der zumeist auf einem Teil seiner Fläche gelocht ist und meist an seinen Stirnflächen ringförmige Abdeckbleche enthält, um unerwünschtes Austreten des Stoffes zu verhindern. In ihr wird das mit Wasser versetzte Altpapier durch Anheben, Rutschen und Fallen, bzw. Relativbewegungen der Stoffanteile zueinander, zerkleinert. Bei Vorhandensein von Sortieröffnungen im Trommelmantel kann der suspendierte Faserstoff dadurch austreten. Ausführungsformen solcher Auflösetrommeln sind z.B. in der DE-PS 32 10 503 gezeigt und beschrieben.

Verfahren zur Behandlung von Altpapier, die mit solchen oder ähnlichen Auflösetrommeln arbeiten, haben bekanntlich den Vorteil einer besonders schonenden Auflösung, sowohl was empfindliche Fasersorten als auch sortierbar zu erhaltende unerwünschte Begleitstoffe betrifft. Das erkauft man jedoch durch den Nachteil, daß sie am günstigsten nur für solche Altpapiersorten eingesetzt werden sollten, deren Auflösbarkeit besonders leicht ist, was bedeutet, daß sie möglichst keine Anteile schwer auflösbarer Papiersorten enthalten dürfen. Die Begriffe schwer und leicht auflösbar sind dem Fachmann durchaus geläufig, wobei z.B. Zeitungspapier als leicht auflösbar und "teilnaßfeste", oberflächenbehandelte und "naßfeste" Papiersorten schwer auflösbar sind. Man kann auch von hoher bzw. geringer Auflösbarkeit sprechen. Als Maß für die Auflösbarkeit kann z.B. die spezifische Arbeit angegeben werden, die während des Auflösevorganges im Stofflöser zur Erzeugung einer pumpfähigen Suspension benötigt wird. Sie beträgt z.B. bei Zeitungspapier ca. 15 - 20 kWh/t und bei Liner oder oberflächenbehandelten Papieren bis zu 80 kWh/t. Aus den genannten Gründen haben sich Verfahren, bei denen Auflösetrommeln verwendet werden, besonders bei sogenanntem Deinkingstoff bewährt, also bedruckten sortierten Altpapiersorten, die-wie schon erwähnt - in der Regel leicht auflösbar sind.

Werden dennoch Trommeln für weniger gut auflösbare Sorten eingesetzt, kann man z.B. gemäß der Lehre der EP 0 486 904 A1 (oberbegriff des Anspruches 1, sowie des Anspruches 13) vorgehen. Dann dient die Trommel als "Voreinweichtrommel" zum Einweichen des Altpapiers. Ihr folgt eine Grobreinigung, die ohne Faserstoffverlust den Schmutz entfernt. Anschließend wird der Stoff gesamthaft mit erheblicher Zugabe von Auflösechemikalien in einer weiteren Maschine aufgelöst.

In der EP 0 218 738 ist ein Verfahren vorgeschlagen worden, in dem zwei Trommeln nacheinander benutzt werden. Dabei dient die erste nur der Auflösung und Vermischung und die zweite der Sortierung von unerwünschten Bestandteilen des Altpapiers.

Bei einem in der US 3,925,150 beschriebenen Verfahren wird zunächst der gesamte Rohstoff in den Pulper eingetragen und aufgelöst. Gleichzeitig wird mit Hilfe einer Zopfwinde und eines Schwerschmutzelevators der gröbste Schmutz beseitigt. Der aufgelöste Stoff wird dann zusammen mit den verbleibenden Störstoffen durch das Pulpersieb abgeführt und gelangt anschließend via Hydrozyklon in einen Sortierer. Dort wird bei relativ kleiner Lochung (z.B. 3,2 mm) eine Trennung in Fein- und Grobstoff vorgenommen. Dieses Verfahren ist aufwendig und kann zu einer schnellen Zerkleinerung der mit dem Altpapier eingetragenen faserfremden Verunreinigungen führen.

Der vorliegenden Erfindung liegt die Aufgabe zugrunde, ein Verfahren zu schaffen, bei dem auch Altpapiere effektiv aufgelöst werden können, die nicht nur leicht sondern auch schwer auflösbare Papiersorten enthalten. Es soll energetisch günstig sein und eine hohe Ausbeute der Fasern liefern. Die unerwünschten Begleitstoffe sollen dabei weitgehend aussortiert werden oder wenigstens ausreichend sortierbar bleiben.

Diese Aufgabe wird durch die Kennzeichen des Anspruchs 1 gelöst.

Ein besonderer Vorteil des Verfahrens liegt darin, daß das eingesetzte Altpapier zunächst durch eine an sich bekannte schonende und energiesparende Trommelauflösung Ein besonderer Vorteil des Verfahrens liegt darin, daß das eingesetzte Altpapier zunächst durch eine an sich bekannte schonende und energiesparende Trommelauflösung behandelt wird, und daß erst nach Abtrennung der so gewinnbaren Fasern die anderen, also schwer auflösbaren Papieranteile zerkleinert und suspendiert werden. Nur diese deutlich geringere Menge wird mit höherer spezifischer Arbeit aufgelöst. Auch die ggf. erforderliche Abtrennung von unerwünschten Altpapierbegleitern kann nun an einer kleineren Menge praktiziert werden, was ebenfalls wirtschaftlicher ist. Die unerwünschten Begleitstoffe des Altpapiers werden oft "Störstoffe" genannt und sind z. B. Kunstoffolien, Beschichtungen, Hartschaum, um nur diese zu nennen

Die Weiterbehandlung der Grobfraktion kann ganz gezielt die stofflichen Unterschiede von Papier und Kunststoff nutzen, nämlich die unterschiedliche Festigkeit und das unterschiedliche spezifische Gewicht im nassen Zustand.

Die Erfindung und ihre Vorteile werden erläutert anhand von Zeichnungen. Dabei zeigen:
- Fig. 1: ein Schema des erfindungsgemäßen Verfahrens;
- Fig. 2: eine Verfahrensvariante;
- Fig. 3 bis 5: je eine Anlage zur Durchführung des Verfahrens (schematisch);
- Fig. 6: Detailvariante der in Fig. 5 gezeigten Anlage.

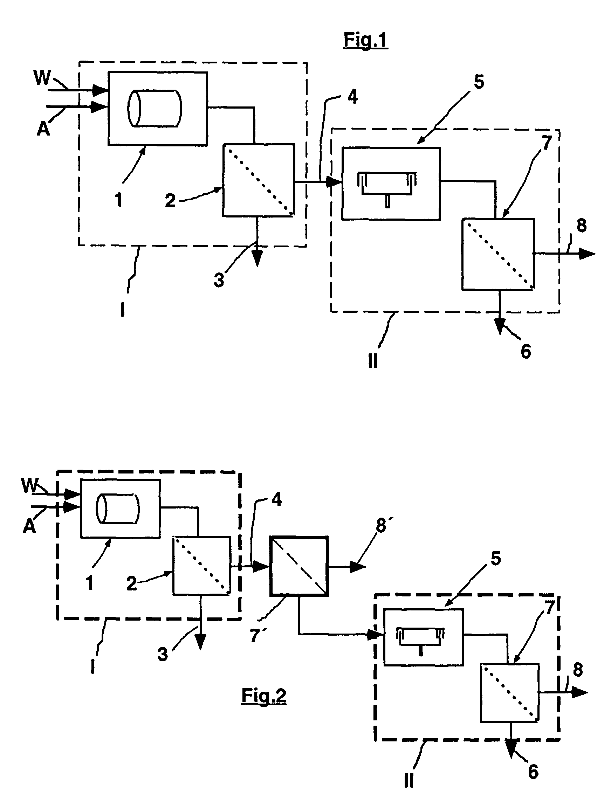

Das Verfahrensschema gemäß Figur 1 zeigt die Zugabe von Wasser W und Altpapier A in eine rotierende Trommel 1. In einer solchen an sich bekannten Trommel werden die Stoffe intensiv vermischt, wobei z.B. infolge der Hebe-, Rutsch- und Fallbewegungen eine Zerkleinerung des aufgeweichten Papiermaterials erfolgt. Aus der so behandelten Mischung kann durch Abtrennung 2 das leichter auflösbare Altpapier bereits aussortiert werden, wobei sich eine Feinfraktion 3 bildet. Die Grobfraktion 4, also der bei der Abtrennung 2 abgewiesene Teil der Mischung wird anschließend in einer intensiveren Zerkleinerungsbehandlung 5 weiter bearbeitet. Nach dieser Zerkleinerung kann eine weitere Trennung 7 erfolgen, bei der wiederum die nunmehr zerkleinerten Papierbestandteile als schwer lösliche Papierstoff-Fraktion 6 gewonnen werden, während die Störstoffe 8 abgewiesen werden. Zu dieser schematischen Darstellung ist zu sagen, daß die einzelnen Verfahrensschritte zwar in der angezeigten Reihenfolge aufeinanderfolgen, aber in der technischen Realisierung oft auch teilweise gleichzeitig ablaufen können. Das bedeutet, daß ein Teil des sich an einer bestimmten Stelle in der Anlage befindenden Altpapiers schon sortierfähig ist, während andere Bestandteile an derselben Stelle noch zerkleinert werden müssen. Diese mögliche Gleichzeitigkeit der Behandlung ist dabei innerhalb der jeweiligen Verfahrensstufen möglich, wobei die erste Stufe I die Trommel 1 und Abtrennung 2 enthält und die zweite Stufe II die intensivere Zerkleinerung 5 und die Trennung 7.

In Fig. 2 ist ein Verfahren gezeigt, bei dem zwischen der ersten Stufe I und der zweiten Stufe II eine Grobreinigung 7' geschaltet ist, die grobe Verunreinigungen 8' ausscheidet. Dadurch wird die zweite Stufe entlastet, was bei stark verschmutztem Eintrag von Vorteil ist.

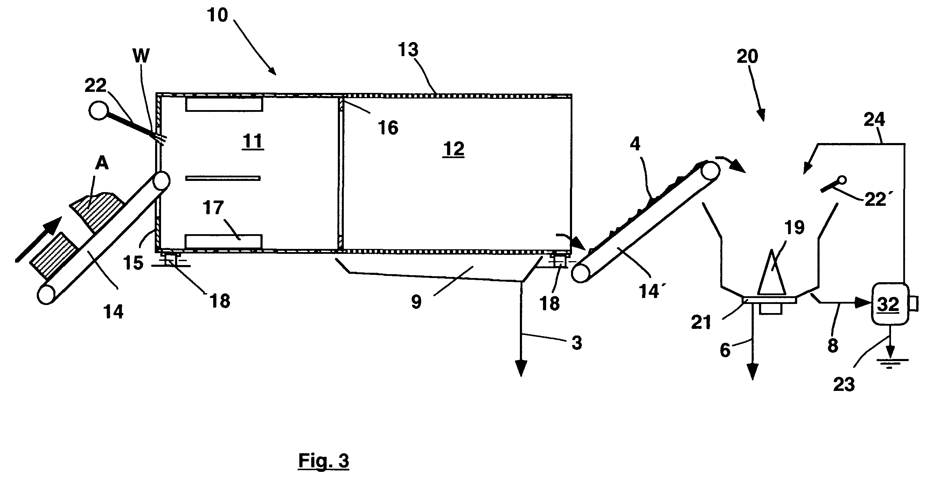

Figur 3 zeigt schematisch eine Anlage, mit der die Durchführung des erfindungsgemäßen Verfahrens möglich ist. Man erkennt eine Auflösetrommel 10 mit einem ungelochten Auflösebereich 11 und einem gelochten Sortierbereich 12. Diese Trommel ist hier mit horizontaler Achse gezeichnet, in vielen Fällen kann aber eine leichte Schrägstellung für den Betrieb von Vorteil sein. Das Altpapiermaterial A wird durch eine Fördereinrichtung 14 in den Beschickungsbereich der Auflösetrommel 11 transportiert, in dem durch die Wasserleitung 22 das benötigte Wasser zugemischt wird. Man erkennt ein stirnseitiges Abschirmblech 15 mit einem zentralen offenen Bereich, wodurch die Beschickung möglich ist. Die Lagerungen 18 der Trommel gewährleisten eine Rotationsbeweglichkeit und enthalten irgendwo einen hier nicht gezeichneten Antrieb. Im Inneren der Trommel sind Mitnehmer 17 angeordnet, die die Aufgabe haben, die untenliegende Mischung infolge der Trommelrotation so weit anzuheben, daß eine Fallbewegung möglich ist, die der Vermischung und Zerkleinerung dient. Solche Einbauten sind in vielfältiger Form bereits bekannt und werden auf den Verwendungszweck abgestimmt bzw. optimiert. Zwischen dem Auflösebereich 11 und dem Sortierbereich 12 der Trommel 10 ist ein ringförmiges Trennblech 16 vorhanden, das eine Stauwirkung hat und einen Sumpf bildet. Es können auch mehrere sein. Im Sortierbereich 12 ist der Trommelmantel mit einer Vielzahl von Öffnungen 13 versehen, die so abgestimmt sind, daß ein gewünschter Teil bereits aufgelösten Stoffes durch diese hindurchtreten und in die Wanne 9 gelangen kann, aus der er in Form der Feinfraktion 3 abgepumpt wird. Der Rückstand im Sortierbereich 12 gelangt über ein weiteres Fördereinrichtung 14' in einen Stofflöser 20 mit einem Rotor 19, in dem in an sich bekannter Weise die eingetragenen Rohstoffe mit im Vergleich zur Trommelauflösung relativ hoher spezifischer Energie zerkleinert und - soweit erforderlich - mit Wasser, z.B. aus der Leitung 22', vermischt werden können. Dabei lösen sich von den faserigen Bestandteilen die nicht faserigen Bestandteile ab. Über einen sich unten befindenden Gutstoffringkanal 21 wird die pumpfähige Fraktion aus schwer lösbaren Papierstoffen 6 abgeführt, während der Rückstand als Rejekt 7 in eine Rejektaufbereitung 32 gelangt. In dieser wird der Stoff noch weiter aufgeschlossen, so daß ein weitgehend von Fasern befreiter Rejekt 23 abgegeben wird, während ein großer Teil des Wassers und restliche Fasern durch die Leitung 24 z.B. in den Stofflöser 20 zurückgelangen können.

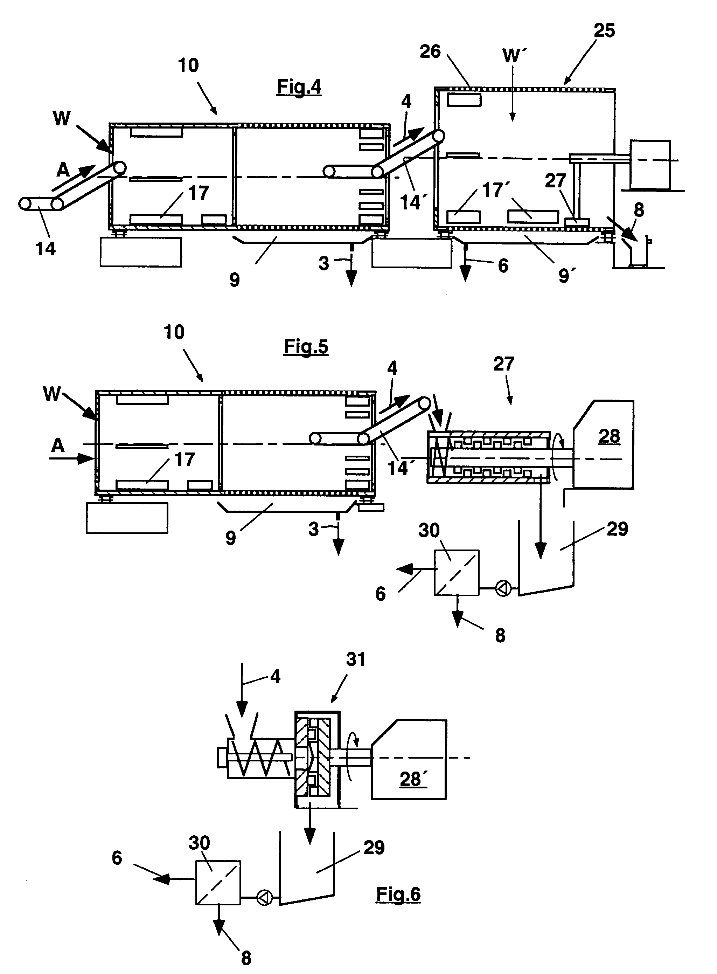

Die in Fig. 4 gezeigte Anlage unterscheidet sich von der in Fig. 3 im wesentlichen dadurch, daß die intensivere mechanische Behandlung nicht in einem Stofflöser sondern in einer weiteren, dafür speziell ausgerüsteten Naßfestauflösetrommel 25 erfolgt. In diese wird die Grobfraktion 4 hier über ein Fördereinrichtung 14' am stirnseitigen Ende eingetragen. Die gemäß dem Verfahren hier erforderliche höhere mechanische Intensität kann dadurch erreicht werden, daß z.B. der Durchmesser dieser Trommel größer ist, so daß sich eine größere Fallhöhe für das zu zerkleinernde Material ergibt, oder daß spezielle Einbauten vorgesehen werden, oder daß verstärkte Trennkräfte auf den Faserverbund einwirken. Es sind z.B. Einbauten denkbar, die mit feststehenden Zerkleinerungselementen 27 versehen sind, um im Zusammenwirken mit der sich bewegenden Trommelwand den Altpapierstoff zu zerkleinern. Es ist ebenso möglich, derartige Zerkleinerungselemente 27 angetrieben zu bewegen, es kommt lediglich auf eine Relativgeschwindigkeit zwischen der Trommelwand und den Elementen an. Weitere Maßnahmen zur Intensivierung der mechanischen Behandlung wären die Zugabe von Chemikalien und/oder die Erwärmung des Stoffes. Beides könnte etwa zusammen mit eventuell zugegebenem Wasser W' erfolgen. Die Naßfestauflösetrommel 25 weist Öffnungen 26 auf, durch die der bereits aufgelöste Faserstoff in die Wanne 9' gelangen kann, um dann - wie beabsichtigt - als pumpfähige Fraktion aus schwer lösbaren Papierstoffen 6 weiterverwendet zu werden. Die auch nach der intensiven mechanischen Behandlung noch abgewiesenen Störstoffe 8 können anschließend entwässert und aus dem Papiererzeugungsprozeß ausgesondert werden.

Sind die im Altpapier enthaltenen Bestandteile besonders schwer auflöslich, kann es vorteilhaft sein, die intensivere Zerkleinerungsbehandlung in einem Kneter 27 durchzuführen, wie es in Fig. 5 angedeutet ist. Dieser hat eine horizontale Welle, die von einem kräftigen Motor 28 angetrieben ist. In einem solchen Fall wird die aus der Auflösetrommel 10 stammende Grobfraktion in den Kneter 27 eingebracht. Derartige Kneter sind zur Zerfaserung von Altpapier bekannt. Sie arbeiten bei ca. 8 % bis 30 % Trockengehalt durch mechanische Scherkräfte zwischen den zu zerkleinernden Stoffen, ohne daß ein eigentlicher Schnitt erfolgen kann, da die relativ zueinander beweglichen Werkzeuge sich nicht berühren. Der so aufgeschlossene Stoff ist in der Regel pumpfähig, wenn er z.B. in einer Bütte 29 mit Wasser verdünnt wird. Er kann dann über einen Sortierer 30 behandelt werden, wodurch die pumpfähige Fraktion aus schwer lösbaren Papierstoffen 6 von den Störstoffen 8 getrennt wird. In anderen Fällen kann es günstig sein, anstelle eines Kneters 27 einen Zerfaserer 31 (Fig. 6) mit radial geführtem Stoff, auch als Disperger bekannt, zu verwenden. Auch in diesem werden die Zerfaserungswerkzeuge in einem definierten Abstand voneinander bewegt.

Wie bereits erwähnt, ist es mit Hilfe des erfindungsgemäßen Verfahrens bzw. der erfindungsgemäßen Anlagen besonders gut möglich, die Störstoffe - insbesondere Kunststoffolien aus der Altpapiermischung zu entfernen. Bekanntlich sind solche Verfahren mit beträchtlichem apparativen Aufwand verbunden, so daß die Reduzierung der zu behandelnden Menge einen beträchtlichen Vorteil bietet.

## Patentansprüche

1. Verfahren zur Behandlung von Altpapier, das Anteile unterschiedlicher, insbesondere geringer Auflösbarkeit enthält, mit den folgenden Behandlungsschritten
1.1 Einfüllen des Altpapiers (A) in eine rotierende Trommel (1), deren Mittellinie höchstens 30° gegen die Horizontale geneigt ist,
1.2 Vermischung mit zugegebenem Wasser (W), wobei die so erzeugte Mischung einen Feststoffgehalt zwischen 6 und 30 % hat,
1.3 mechanische Behandlung der Mischung durch Kräfte, die beim Heben, Rollen und Fallen der Mischung innerhalb der Trommel (1) auftreten,
1.4 Abtrennung (2) einer Papierstoff enthaltenden Feinfraktion (3), die aufgrund ihrer geringeren Größe Sortieröffnungen passiert,
**dadurch gekennzeichnet,**
1.5 daß die Abtrennung der Feinfraktion durch Sortieröffnungen im Sortiebereich (12) des rotierenden Trommels (1) passiert, während die Grobfraktion (4) als Rückstand den Sortiebereich (12) wieder verläßt, wobei die Feinfraktion (3) die leichter auflösbaren Altpapierbestandteile und die an den Sortieröffnungen abgewiesene Grobfraktion (4) die Papieranteile von geringerer Auflösbarkeit enthält und
1.6 daß die Grobfraktion (4) einer Zerkleinerungsbehandlung (5) zugeführt wird, die intensiver ist als die mechanische Behandlung der Mischung in der Trommel (1) und die durch Einstellung der Kräfte und der Behandlungsdauer so durchgeführt wird, daß Papieranteile von geringerer Auflösbarkeit in eine pumpfähige Fraktion aus schwer lösbaren Papierstoffen (6) überführt werden.

2. Verfahren nach Anspruch 1,
**dadurch gekennzeichnet,**
**daß** die in der intensiveren Zerkleinerungsbehandlung (5) auf die Grobfraktion (4) übertragenen mechanischen Kräfte höher sind als bei der anfänglichen mechanischen Behandlung der Mischung.

3. Verfahren nach Anspruch 1 oder 2,
**dadurch gekennzeichnet,**
**daß** die an den Sortieröffnungen abgewiesene Grobfraktion (4) vor der intensiveren Zerkleinerungsbehandlung (5) einer Grobreinigung (7') zur Abtrennung grober Verunreinigungen (8') unterzogen wird.

4. Verfahren nach Anspruch 1, 2 oder 3,
**dadurch gekennzeichnet,**
**daß** die Verfahrensbedingungen der intensiveren Zerkleinerungsbehandlung (5) so gewählt sind, daß zumindest ein Teil der Nichtpapierbestandteile weniger stark zerkleinert wird als die Papieranteile und bei einer Trennung (7) durch Naß-Siebung ausgeschieden wird.

5. Verfahren nach Anspruch 1, 2, 3 oder 4,
**dadurch gekennzeichnet,**
**daß** die intensivere Zerkleinerung (5) in einem sogenannten Mittelstoffdichte-Stofflöser bei einem Stoffdichtebereich zwischen 7 und 12 % erfolgt.

6. Verfahren nach Anspruch 1, 2, 3 oder 4,
**dadurch gekennzeichnet,**
**daß** die intensivere Zerkleinerung (5) in einem sogenannten Hochstoffdichte-Stofflöser bei einem Stoffdichtebereich zwischen 10 und 20 % erfolgt.

7. Verfahren nach Anspruch 5 oder 6,
**dadurch gekennzeichnet,**
**daß** die pumpfähige Fraktion aus schwer lösbaren Papierstoffen 6 aus dem Stofflöser abgeführt wird, und der faserfremde Verunreinigungen, insbesondere Plastikfolien, enthaltende Rückstand des Stofflösers, also die Störstoffe (8), einem nachgeschalteten Rejektsystem (32) mit starker Zerfaserung der restlichen Papierbestandteile und Aussortierung der Verunreinigungen (23) zugeführt wird.

8. Verfahren nach Anspruch 1, 2, 3 oder 4,
**dadurch gekennzeichnet,**
**daß** die intensivere Zerkleinerung (5) in einen Zerfaserer bei einer Stoffdichte zwischen 10 und 20 % erfolgt.

9. Verfahren nach Anspruch 1, 2, 3 oder 4,
**dadurch gekennzeichnet,**
**daß** die intensivere Zerkleinerung (5) in einer weiteren Trommel bei einer Stoffdichte zwischen 10 und 25 % erfolgt.

10. Verfahren nach einem der voranstehenden Ansprüche,
**dadurch gekennzeichnet,**
**daß** sowohl die mechanischen Behandlung der Mischung als auch die Abtrennung der Feinfraktion in derselben Trommel (1, 10) erfolgt.

11. Verfahren nach einem der voranstehenden Ansprüche,
**dadurch gekennzeichnet,**
**daß** Kräfte zur mechanischen Behandlung der Mischung auch durch mit der Trommel (1, 10) oder relativ zu ihr bewegte mechanische Elemente erzeugt werden.

12. Anwendung des Verfahrens nach einem der voranstehenden Ansprüche,
**dadurch gekennzeichnet,**
**daß** die Faserstoffe der Feinfraktion (3) und die der Papierstoff-Fraktion (6), die jeweils aufgrund des unterschiedlichen Auflöseverhaltens unterschiedliche Qualitäten haben, bei der Papierproduktion entsprechend ihrer unterschiedlichen Qualitäten eingesetzt werden.

13. Anlage zur Durchführung des Verfahrens nach Anspruch 1, 2 oder 4 mit einer einen Auflösebereich (11) und einen Sortierbereich (12) enthaltenden rotierbaren Auflösetrommel (10), in die an der einen Stirnseite das zu behandelnde Altpapier A und das benötigte Wasser W eingeführt werden kann, welche Auflösetrommel an ihren Innnenflächen Mitnehmer (17) aufweist, um ein Heben und Fallen des eingetragenen Materials infolge der Rotationsbewegung der Auflösetrommel zu ermöglichen, wobei der Trommelmantel im Sortierbereich (12) mit einer Vielzahl von Öffnungen (13) versehen ist, die eine lichte Weite zwischen 5 und 50 mm haben, durch die ein Teil des Stoffes als Feinfraktion (3) abgeführt werden kann, während der andere Teil, die Grobfraktion (4), als Rückstand den Sortierbereich (12) wieder verläßt,
**dadurch gekennzeichnet,**
**daß** die Grobfraktion (4) in einen weiteren Auflöseapparat gelangen kann, der geeignet ist, naßfeste Papiersorten bis zur Pumpfähigkeit zu zerkleinern.

14. Anlage nach Anspruch 13,
**dadurch gekennzeichnet,**
**daß** die Grobfraktion (4) einer Maschine zur Grobreinigung (7') zugeleitet wird, in der grobe Verunreinigungen (8') ausgeschieden werden.

15. Anlage nach Anspruch 14,
**dadurch gekennzeichnet,**
**daß** die Grobreinigung in einer mit mindestens einem Sieb versehenen Sortiermaschine erfolgt, in der die groben Verunreinigungen (8') durch das Sieb zurückgehalten werden können.

16. Anlage nach Anspruch 13, 14 oder 15,
**dadurch gekennzeichnet,**
**daß** der weitere Auflöseapparat eine Sortierstufe enthält, in der die naßfesten Papiersorten vom noch nicht zerkleinerten Rückstand getrennt werden können.

17. Anlage nach Anspruch 16,
**dadurch gekennzeichnet,**
**daß** der weitere Auflöseapparat eine Naßfest-Auflösetrommel (25) ist, und die Sortierstufe durch im Mantel der Naßfest-Auflösetrommel (25) vorhandene Öffnungen (26) gebildet wird.

18. Anlage nach Anspruch 13,
**dadurch gekennzeichnet,**
**daß** der weitere Auflöseapparat ein Stofflöser (20) mit einem angetriebenen Rotor (19) ist, und die Sortierstufe durch ein im Boden des Stofflösers montiertes, einen Gutstoffringkanal (21) abteilendes Siebblech gebildet wird.

19. Anlage nach Anspruch 13,
**dadurch gekennzeichnet,**
**daß** der weitere Auflöseapparat ein Kneter (27) mit relativ zueinander bewegten, sich nicht berührenden Werkzeugen ist, dem eine Sortierstufe in Form eines Sortierers (30) nachgeschaltet ist.

20. Anlage nach Anspruch 13,
**dadurch gekennzeichnet,**
**daß** der weitere Auflöseapparat ein Zerfaserer (31) mit relativ zueinander bewegten, sich nicht berührenden Werkzeugen ist, dem eine Sortierstufe in Form eines Sortierers (30) nachgeschaltet ist.

## Claims

1. Process for treating waste paper containing fractions of differing, in particular low, solubility, with the following treatment steps
1.1 Filling of the waste paper (A) into a rotating drum (1) whose axis is tilted a maximum of 30° against the horizontal,
1.2 Mixing with added water (W), the mixture thus produced having a solid content of between 6 and 30%,
1.3 Mechanical treatment of the mixture by forces which arise during the lifting, rolling and falling of the mixture inside the drum (1),
1.4 Separating-off (2) of a fine fraction (3) which contains pulp, and which passes through sorting openings because of its small size,
**characterised in that**
1.5 the separating-off of the fine fraction through sorting openings takes place in the sorting area (12) of the rotating drum (1), whilst the coarse fraction (4) leaves the sorting area as a residue, the fine fraction (3) containing the more-readily soluble waste-paper components, and the coarse fraction (4) rejected to the sorting openings containing the paper fractions of lower solubility, and
1.6 the coarse fraction (4) is fed to a size-reduction treatment (5) that is more intensive that the mechanical treatment of the mixing in the drum (1), and which is carried out by adjusting the forces and length of treatment such that paper fractions of lower solubility are converted to a pumpable fraction composed of highly insoluble pulp (6).

2. Process according to claim 1,
**characterised in that**
the mechanical forces transmitted to the coarse fraction (4) during the more intensive size-reduction treatment (5) are greater than during the initial mechanical treatment of the mixture.

3. Process according to claim 1 or 2,
**characterised in that**
the coarse fraction (4) rejected to the sorting openings is subjected to a coarse cleaning (7') for separating-off coarse impurities (8') before the more intensive size-reduction treatment (5).

4. Process according to claim 1, 2 or 3,
**characterised in that**
the process conditions of the more intensive size-reduction treatment (5) are so chosen that at least a part of the non-paper components are reduced less in size than the paper fractions, and are eliminated during a separation (7) by means of wet sieving.

5. Process according to claim 1, 2, 3 or 4,
**characterised in that**
the more intensive size-reduction (5) takes place in a so-called medium-consistency pulper at a consistency range of between 7 and 12%.

6. Process according to claim 1, 2, 3 or 4,
**characterised in that**
the more intensive size-reduction (5) takes place in a so-called high-consistency pulper at a consistency range of between 10 and 20%.

7. Process according to claim 5 or 6,
**characterised in that**
the pumpable fraction composed of highly insoluble pulp 6 is conveyed out of the pulper, and the residue of the pulper which contains non-fibrous impurities, in particular plastic films - i.e. the extraneous matter (8) - is fed to an attached reject system (32) with a strong defibration of the remaining paper components and extraction of the impurities (23).

8. Process according to claim 1, 2, 3 or 4,
**characterised in that**
the more intensive size-reduction (5) takes place in a defibrator at a consistency of between 10 and 20%.

9. Process according to claim 1, 2, 3 or 4,
**characterised in that**
the more intensive size-reduction (5) takes place in a further drum at a consistency of between 10 and 25%.

10. Process according to any one of the preceding claims,
**characterised in that**
both the mechanical treatment of the mixture as well as the separating-off of the fine fraction takes place in the same drum (1, 10).

11. Process according to any one of the preceding claims,
**characterised in that**
forces for the mechanical treatment of the mixture are also generated by means of mechanical elements moved with or relative to the drum (1, 10).

12. Application of the process according to any one of the preceding claims,
**characterised in that**
the fibrous materials of the fine fraction (3) and of the pulp fraction (6), which each have different qualities because of their different dissolution behaviour, are used in paper manufacture according to their different qualities.

13. Apparatus for carrying out the process according to claim 1, 2 or 4 with a rotatable dissolving drum (10) containing a dissolving area (11) and a sorting area (12), into which drum the waste paper A to be treated and the required water W may be introduced at one end, which dissolving drum exhibits catches (17) on its inside surfaces, in order to permit the lifting and falling of the introduced material as a result of the rotational movement of the dissolving drum, the drum casing being provided in the sorting area (12) with a plurality of openings (13) having a clear width of between 5 and 50 mm through which a part of the material can be carried off as a fine fraction (3), whilst the other part, the coarse fraction (4), leaves the sorting area (12) as a residue,
**Characterised in that**
The coarse fraction (4) can be conveyed into a further dissolving apparatus which is suitable for comminuting wet-strength paper types until they are capable of being pumped.

14. Apparatus according to claim 13,
**characterised in that**
the coarse fraction (4) is fed to a machine for coarse cleaning (7'), in which coarse impurities (8') are eliminated.

15. Apparatus according to claim 14,
**characterised in that**
the coarse cleaning takes place in a sorting machine equipped with at least one sieve, in which the coarse impurities (8') can be retained by the sieve.

16. Apparatus according to claim 13, 14 or 15,
**characterised in that**
the additional dissolving apparatus contains a sorting step in which the wet-strength paper types can be separated from the residue which has not yet been reduced in size.

17. Apparatus according to claim 16,
**characterised in that**
the additional dissolving apparatus is a wet-strength dissolving drum (25), and the sorting step is formed by the openings (26) present in the casing of the wet-strength dissolving drum (25).

18. Apparatus according to claim 13,
**characterised in that**
the additional dissolving apparatus is a pulper (20) with a driven rotor (19), and the sorting step is formed by a sieve plate installed in the bottom of the pulper and which separates off an accepts ring channel (21).

19. Apparatus according to claim 13,
**characterised in that**
the additional dissolving apparatus is a kneader (27) with tools moved relative to one another but not touching, and to which a sorting step in the form of a sorter (30) is attached.

20. Apparatus according to claim 13,
**characterised in that**
the additional dissolving apparatus is a defibrator (31) with tools moved relative to one another but not touching, and to which a sorting step in the form of a sorter (30) is attached.

## Revendications

1. Procédé de traitement de vieux papiers, qui contiennent des fractions dont la solubilité est différente, en particulier faible, comportant les étapes de traitement suivantes :
1.1 introduction des vieux papiers (A) dans un tambour rotatif (1) dont la ligne médiane est inclinée de 30° au maximum par rapport à l'horizontale,
1.2 mélange avec de l'eau (W) ajoutée, le mélange ainsi produit ayant une teneur en matières solides comprise entre 6 et 30 %,
1.3 traitement mécanique du mélange par des forces qui se produisent lorsque le mélange se soulève, roule et tombe à l'intérieur du tambour (1),
1.4 séparation (2) d'une fraction fine (3) qui contient de la pâte à papier et qui, en raison de sa taille réduite, traverse des orifices de tri, **caractérisé en ce que**
1.5 la séparation de la fraction fine traverse des orifices de tri dans la zone de tri (12) du tambour (1) rotatif, tandis que la fraction grossière (4) quitte à nouveau la zone de tri en tant que refus, la fraction fine (3) contenant les constituants plus facilement solubles des vieux papiers et la fraction grossière (4), refusée au niveau des orifices de tri, contenant les constituants de papier qui présentent une solubilité moindre, et
1.6 **en ce que** la fraction grossière (4) est acheminée vers un traitement de fragmentation (5), qui est plus intensif que le traitement mécanique du mélange dans le tambour (1) et qui est exécuté, par réglage des forces et de la durée du traitement, de manière que des constituants du papier, de solubilité moindre, soient transformés en une fraction, constituée de pâte à papier (6) difficilement soluble, qui peut être pompée.

2. Procédé selon la revendication 1, **caractérisé en ce que** les forces mécaniques, transmises à la fraction grossière (4), pendant le traitement de fragmentation (5) plus intensif, sont supérieures à celles du traitement mécanique initial du mélange.

3. Procédé selon la revendication 1 ou 2, **caractérisé en ce que** la fraction grossière (4), refusée au niveau des orifices de tri, est soumise, avant le traitement de fragmentation (5) plus intensif, à une épuration grossière (7') destinée à séparer les impuretés (8') grossières.

4. Procédé selon la revendication 1, 2 ou 3, **caractérisé en ce que** les conditions du procédé du traitement de fragmentation (5) plus intensif, sont choisies de manière qu'au moins une partie des constituants qui ne sont pas du papier soit moins fragmentée que les constituants du papier et qu'ils soient séparés au cours d'une séparation (7) par criblage par voie humide.

5. Procédé selon la revendication 1, 2, 3 ou 4, **caractérisé en ce que** la fragmentation (5) plus intensive s'effectue dans un pulpeur pour consistance moyenne avec un domaine de consistance compris entre 7 et 12 %.

6. Procédé selon la revendication 1, 2, 3 ou 4, **caractérisé en ce que** la fragmentation (5) plus intensive s'effectue dans un pulpeur pour haute consistance avec un domaine de consistance compris entre 10 et 20 %.

7. Procédé selon la revendication 5 ou 6, **caractérisé en ce que** la fraction qui peut être pompée, constituée de pâte à papier (6) difficilement soluble, est évacuée du pulpeur, et le refus du pulpeur, qui contient des impuretés autres que des fibres, en particulier des feuilles plastiques, c'est-à-dire les substances parasites (8) sont acheminées vers un système de rejet (32) monté en aval, avec forte trituration des constituants résiduels de papier et séparation des impuretés (23).

8. Procédé selon la revendication 1, 2, 3 ou 4, **caractérisé en ce que** la fragmentation (5) plus intensive s'effectue dans un défibreur avec une consistance comprise entre 10 et 20 %.

9. Procédé selon la revendication 1, 2, 3 ou 4, **caractérisé en ce que** la fragmentation (5) plus intensive s'effectue dans un autre tambour avec une consistance comprise entre 10 et 25 %.

10. Procédé selon l'une des revendications précédentes, **caractérisé en ce que** le traitement mécanique du mélange ainsi que la séparation de la fraction fine s'effectuent dans le même tambour (1, 10).

11. Procédé selon l'une des revendications précédentes, **caractérisé en ce que** des forces pour le traitement mécanique du mélange sont produites aussi par des éléments mécaniques déplacés avec le tambour (1, 10) ou par rapport à celui-ci.

12. Mise en oeuvre du procédé selon l'une des revendications précédentes, **caractérisée en ce que** les matières fibreuses de la fraction fine (3) et celles de la fraction de pâte à papier (6) qui ont des qualités différentes du fait du comportement différent à la dissolution, sont utilisées dans la production de papier en fonction de leurs qualités différentes.

13. Installation pour la mise en oeuvre du procédé selon la revendication 1, 2 ou 4, comportant un tambour de dissolution (10) rotatif, contenant une zone de dissolution (11) et une zone de tri (12), dans lequel les vieux papiers (A) à traiter et l'eau (W) nécessaire peuvent être introduits sur un côté frontal, le tambour de dissolution comportant sur ses surfaces intérieures, des entraîneurs (17) afin de permettre à la matière introduite de se soulever et de tomber par suite du mouvement de rotation du tambour de dissolution, l'enveloppe du tambour étant pourvue dans la zone de tri (12) d'un grand nombre d'ouvertures (13) qui ont une largeur utile comprise entre 5 et 50 mm, à travers lesquelles une partie de la matière peut être évacuée sous la forme d'une fraction fine (3), tandis que l'autre partie, la fraction grossière (4), quitte à nouveau la zone de tri (12) en tant que refus, **caractérisée en ce que** la fraction grossière (4) peut parvenir dans un autre appareil de dissolution qui est apte à fragmenter les types de papier résistant à l'humidité jusqu'à ce qu'ils puissent être pompés.

14. Installation selon la revendication 13, **caractérisée en ce que** la fraction grossière (4) est acheminée vers une machine d'épuration grossière (7') dans laquelle les impuretés grossières (8') sont séparées.

15. Installation selon la revendication 14, **caractérisée en ce que** l'épuration grossière s'effectue dans une machine de tri pourvue d'au moins un crible, dans laquelle les impuretés grossières (8') peuvent être retenues par le crible.

16. Installation selon la revendication 13, 14 ou 15, **caractérisée en ce que** l'autre appareil de dissolution contient un étage de tri, dans lequel les types de papier résistant à l'humidité peuvent être séparés du refus non encore fragmenté.

17. Installation selon la revendication 16, **caractérisée en ce que** l'autre appareil de dissolution est un tambour de dissolution (25) pour papier résistant à l'humidité, et l'étage de tri est formé par des ouvertures (26) se trouvant dans l'enveloppe du tambour de dissolution (25).

18. Installation selon la revendication 13, **caractérisée en ce que** l'autre appareil de dissolution est un pulpeur (20) avec un rotor (19) entraîné, et l'étage de tri est formé par une tôle de criblage montée dans le fond du pulpeur et séparant un canal annulaire (21) pour la pâte à papier finie.

19. Installation selon la revendication 13, **caractérisée en ce que** l'autre appareil de dissolution est un pétrisseur (27) avec outils déplacés les uns par rapport aux autres et ne se touchant pas, derrière lequel est monté un étage de tri sous la forme d'une trieuse (30).

20. Installation selon la revendication 13, **caractérisée en ce que** l'autre appareil de dissolution est un défibreur (31) avec outils déplacés les uns par rapport aux autres et ne se touchant pas, derrière lequel est monté un étage de tri sous la forme d'une trieuse (30).
